# EUROPÄISCHE PATENTANMELDUNG

(11) **EP 0 940 744 A2**
(43) Veröffentlichungstag der Anmeldung: **08.09.1999**
(21) Anmeldenummer: 99103596.5
(22) Anmeldetag: 24.02.1999
(51) Int. Cl.: G06F 1/16, G06F 15/02

(54) **Anordnung zur multimedialen Datenverarbeitung**

(30) Priorität: 24.02.1998 DE 19807467
(71) Anmelder: Schneider, Bernd, 01462 Ockerwitz (DE)
(72) Erfinder: Schneider, Bernd, 01462 Ockerwitz (DE)
(74) Vertreter: Adler, Peter, Dipl.-Ing.

(57) **Zusammenfassung**

Der Erfindung, die eine Anordnung zur multimedialen Datenverarbeitung mit einem Handgerät betrifft, in dem ein Computer mit einem primären Bussystem angeordnet ist, betrifft, wobei in dem Kopfteil modular weitere Ein-, Ausgabe- und Kommunikationsmittel angeordnet sind, die zumindest teilweise mit dem Computer in wirkungsverbindung stehen, liegt die Aufgabe zugrunde, eine Anordnung zur multimedialen Datenverarbeitung zu schaffen, mit deren Hilfe eine anwenderspezifische Gerätekonfiguration erreichbar ist und sich damit der Kostenaufwand verringert und die Handhabung verbessert. Gemäß der Erfindung wird die Aufgabe dadurch gelöst, daß der Kopfteil einen Kommunikationscontroller zwischen dem primären Bussystem und einem sekundären Bussystem aufweist. Der Kopfteil ist mit ersten Busleitungen, die im Aufbau dem primären Bussystem entsprechen, versehen. Diese ersten Busleitungen sind einerseits mit dem Kommunikationscontroller und andererseits über lösbare Verbindungen mit dem primären Bussystem verbunden. Weiterhin sind zweite Busleitungen des sekundären Bussystems einerseits mit dem Kommunikationscontroller und andererseits mit den Ein-, Ausgabe- und/oder Kommunikationsmitteln verbunden.

## Beschreibung

Die Erfindung betrifft eine Anordnung zur multimedialen Datenverarbeitung mit einem Handgerät, in dem ein Computer mit einem primären Bussystem angeordnet ist. Das Handgerät ist mit Funktionalelementen, wie einer Tastatur, einem Bildschirm und Ein-/Ausgabeschnittstellen versehen, die mit dem Computer in Wirkungsverbindung stehen, und auf das ein Kopfteil (2) aufgesetzt ist. In dem Kopfteil sind modular weitere Ein-, Ausgabe- und Kommunikationsmittel angeordnet, die zumindest teilweise mit dem Computer in Wirkungsverbindung stehen.

Es sind sogenannte hand-held-Computer bekannt, die ein Handgerät aufweisen, mit dem ein Scanner verbunden ist. Derartige Geräte dienen beispielsweise in der Lagerwirtschaft der Erfassung von Warenbeständen. Dabei wird von dem Scanner ein Warenkennzeichnungscode erfaßt und diese Information in dem Computer weiterverarbeitet. Anschließend können die so erfaßten Computerdaten in übergeordnete Rechnersyteme eingespeist werden.

Weiterhin sind Scanner bekannt, die über ein Funksystem verfügen, mit dem die Scanner direkt mit übergeordneten Rechnersystemen in Verbindung stehen und so der zentralen Datenerfassung dienen.

In der Praxis hat es sich jedoch gezeigt, daß je nach dem Bereich, in dem Datenerfassungsgeräte eingesetzt werden sollen, unterschiedlichste Bedingungen herrschen. Die genannten bekannten Geräte stellen jedoch Einzelgeräte dar, die nur teilweise diesen Bedingungen gerecht werden. So ist es erforderlich, daß sich der Anwender verschiedenartige Einzelgeräte zulegt, um seinen Bedarf abzudecken. Hierbei entsteht ein erheblicher Kostenaufwand. Außerdem wird stets die Bedienung mehrerer Geräte notwendig, was die Handhabung erschwert.

Aus der US-Patentschrift 5,218,187 ist ein tragbares hand-held-Datenterminal bekannt, in dem ein Computer mit einem primären Bussystem angeordnet ist. Das Handgerät ist mit Funktionalelementen, wie einer Tastatur, einem Bildschirm und Ein/Ausgabeschnittstellen versehen, die mit dem Computer in Wirkungsverbindung stehen. Auf das Handgerät ist ein Kopteil aufgesetzt. In dem Kopfteil können modular weitere Ein-, Ausgabe- und Kommunikationsmittel angeordnet werden, die zumindest teilweise mit dem Computer in Wirkungsverbindung stehen.

Zum Betrieb der modularen Ein-, Ausgabe und Kommunikationsmittel ist es erforderlich, daß von dem Computer stets ein Kommunikationsprotokoll zur Verfügung gestellt wird, das eine Kommunikation mit den Ein-, Ausgabe und Kommunikationsmitteln ermöglicht. Da verschiedenste Ein-, Ausgabe und Kommunikationsmittel eingesetzt werden sollen, ist es entweder erforderlich, daß diese alle mit dem gleichen Kommunikationsprotokoll arbeiten. Dann braucht an der Schnittstelle zwischen dem Handgerät und dem Kopfteil nur das einheitliche Protokoll zur Verfügung gestellt werden. Dies verhindert allerdings, daß handelsübliche Ein-, Ausgabe und Kommunikationsmittel ohne weiteres eingesetzt werden können. Sollen verschiedene am Markt befindliche Mittel eingesetzt werden, bedeutete dies, daß mehrere Protokolle an der Schnittstelle zwischen Handgerät und Kopfteil bereitzustellen sind. Dies würde die den gerätetechnischen Aufwand erheblich erhöhen.

Der Erfindung liegt somit die Aufgabe zugrunde, eine Anordnung zur multimedialen Datenverarbeitung zu schaffen, mit deren Hilfe eine anwenderspezifische Gerätekonfiguration erreichbar ist und sich damit der Kostenaufwand verringert und die Handhabung verbessert.

Gemäß der Erfindung wird die Aufgabe dadurch gelöst, daß der Kopfteil einen Kommunikationscontroller zwischen dem primären Bussystem und einem sekundären Bussystem aufweist. Der Kopfteil ist mit ersten Busleitungen, die im Aufbau dem primären Bussystem entsprechen, versehen. Diese ersten Busleitungen sind einerseits mit dem Kommunikationscontroller und andererseits über lösbare Verbindungen mit dem primären Bussystem verbunden. Weiterhin sind zweite Busleitungen des sekundären Bussystems einerseits mit dem Kommunikationscontroller und andererseits mit den Ein-, Ausgabe- und/oder Kommunikationsmitteln verbunden.

Der Kommunikationcontroller ermöglicht es, daß das Protokoll auf dem primären Bussystem in ein Protokoll auf dem sekundären Bussystem umgesetzt wird. Der Kommunikationscontroller ist programmierbar und damit in der Lage, verschiedenste Protokolle für das sekundäre Bussystem auszugeben.

Da die ersten Busleitungen mit dem primären Bussystem des Computers verbindbar sind, erübrigt sich die Bereitstellung einer besonderen Schnittstelle zwischen dem Handgerät und dem Kopfteil oder die Bereitstellung eines besonderen Protokolls durch den Computer.

Der Kommunikationscontroller kann ein RS232-, Parallelinterface-, PCMCIA- oder ein beliebiges anderes Mikrocontrollerverhalten auf dem sekundären Bussystem realisieren. Damit wird es möglich, beliebige handelsübliche Ein-, Ausgabe- und/oder Kommunikationsmittel einzusetzen.

In einer Ausgestaltung der Erfindung weist der Kopfteil einen Einsatz auf, der in das Handgerät hineinragt und auf dem die ersten und die zweiten Busleitungen und der Kommunikationscontroller angeordnet sind. Dadurch wird es möglich, daß das Handgerät als Standardhandgerät dient, das funktional erweiterbar ist. Somit können beispielsweise auf dem Einsatz bereits entsprechende Verbindungen oder Schaltungsanordnungen vorgesehen werden, die dem Einsatz der modularen Ein-, Ausgabe- und Kommunikationsmittel dienen. Es wird erreicht, daß die Fläche des Einsatzes optimal genutzt werden kann, um dadurch den Kopfteil so klein wie möglich zu halten.

In einer weiteren Ausgestaltung der Erfindung ist vorgesehen, daß der Kopfteil mit dem Handgerät lösbar verbunden ist. Einerseits wird damit erreicht, daß die einzelnen modularen Mittel leicht eingesetzt oder ausgewechselt werden können. Andererseits ist es möglich, unterschiedliche Kopfteile mit unterschiedlichem modularem Aufbau bereitzuhalten, die je nach Anwendungsfall nur auszutauschen sind. Dies kann sowohl beim Hersteller als auch beim Anwender geschehen. Im letzteren Fall ist ein Standardhandgerät mit verschiedenen Kopfteilen zu versehen und damit für verschiedenste Funktionen vorzubereiten.

Der durchgängigen Gestaltung der gesamten Anordnung dienend ist der Kopfteil auf einer Seitenfläche des Handgerätes angeordnet und weist dabei eine Grundfläche auf, die der Seitenfläche des Handgerätes kongruent ist. Durch diese Gestaltung folgt der Kopfteil im wesentlichen der Gestaltung des Handgerätes und läßt somit die gesamte Anordnung als ein Gerät erscheinen.

Es ist zweckmäßig, daß das Handgerät in wesentlichen eine Quaderform mit einer rechteckigen Vorderseite und dabei der Kopfteil eine Quaderform der gesamten Anordnungsform sichernde Form aufweist. Durch diese Formgebung wird einerseits eine glatte Außenform realisiert, die eine Beschädigung des Gesamtgeräts weitgehend verhindert und andererseits die Handhabung des Handgeräts in einer Hand erleichtert.

In einer weiteren Ausgestaltung der Erfindung ist vorgesehen, daß an der der Grundfläche des Kopfteiles gegenüberliegenden Seite des Kopfteiles eine oder mehrere Antennen angeordnet sind. Hierzu sind im Kopfteil Sende- und Empfangseinrichtungen eingebracht. Durch diese Konfiguration wird es ermöglicht, daß ein Datenausstausch zwischen dem Handgerät und übergeordneten Geräten via Funk erzielt wird.

In einer weiteren Ausführungsform ist an der der Grundfläche des Kopfes gegenüberliegenden Seite des Kopfteiles ein Schacht zur Aufnahme von Ergänzungsmodulen, wie PC-Cards vorgesehen, die mit dem Computer verbindbar sind. Durch diese PC-Cards können Zusatzfunktionen, Funktionserweiterungen oder zusätzliche Schnittstellen zu anderen peripheren Geräten geschaffen werden. Hierbei kann die Vielfalt der Gestaltung von PC-Cards für die vielfältige Gestaltung der erfindungsgemäßen Anordnung genutzt werden.

An der der Grundfläche des Kopfes gegenüberliegenden Seite des Kopfes kann ebenfalls ein Barcode-Leser vorgesehen sein, der mit dem Computer verbunden ist. Dieser Barcode-Leser kann beispielsweise der Erfassung von Produktdaten dienen, die sodann im Computer selbst verarbeitet werden und/oder über Funk weitergeleitet werden.

Eine weitere vorteilhafte Ausgestaltung der Erfindung besteht darin, daß in dem Kopfteil die Stromversorgung für die gesamte Anordnung angeordnet ist. Hierbei ist es weiterhin zweckmäßig, daß die Stromversorgung aus einer oder mehreren Batterien besteht, die einem verschließbaren Batteriefach einbringbar sind.

Dadurch, daß eine Vielzahl der Funktionselemente, die im Inneren des Kopfteiles anzuordnen sind, entweder durch Funktionselemente innerhalb des Computers oder - sofern vorhanden - durch Elemente, die sich auf dem mit dem Kopfteil verbundenen Einsatz befinden, übernommen werden, ist der Kopfteil im wesentlichen frei zur Aufnahme der Stromversorgungselemente. Da der Kopfteil sehr gut zugänglich ist, ist ein leichtes Auswechseln der Batterien möglich oder sofern die Stromversorgung netzgebunden erfolgt ein einfaches Einstecken eines Verbindungskabels leicht erreichbar.

In einer weiteren Ausgestaltung der Erfindung ist vorgesehen, daß in dem Kopfteil eine Infrarotschnittstelle angeordnet ist. Durch diese Infrarotschnittstelle kann eine Datenübertragung von dem Computer in dem Handgerät auf einen übergeordneten Rechner erfolgen, ohne daß hierfür Verbindungskabel vorzusehen sind. Insbesondere ist die Möglichkeit für explosionsgeschützte Ausführungen vorteilhaft.

In einer weiteren Ausgestaltung der Erfindung ist in dem Kopfteil auf der Rückseite eine Telefonhörmuschel und ein Telefonmikrofon angeordnet. Hierbei wird es möglich, die gegebenenfalls vorhandenen Verbindungselemente zu übergeordneten Rechnersystemen oder die funktechnischen Mittel zur Realisierung einer Telefonfunktion zu nutzen. Damit wird das Handgerät auch als Telefongerät nutzbar, ohne daß hierfür ein zusätzlicher Aufwand notwendig wäre.

Weiterhin kann in dem Kopfteil eine als Steckverbinder ausgeführte parallele und/oder serielle Schnittstelle angeordnet sein, die dem Anschluß von peripheren Zusatzgeräten oder Rechnersystemen dient. In einer weiteren Ausgestaltung der Erfindung ist vorgesehen, daß das Kopfteil mit einem über die Rückseitenfläche des Handgerätes überstehenden Zusatzteil versehen. In diesem Zusatzteil ist ein Einschubschlitz für Chip-Karten angeordnet, wobei sich in dem Zusatzteil ein Chip-Karten-Leser befindet. Hierdurch wird beispielsweise der Einsatz der erfindungsgemäßen Anordnung möglich, wenn personenspezifische Daten über Chip-Karten eingelesen werden sollen, wie dies beipielsweise bei der Patientenversorgung der Fall ist. Bei Vorhandensein eines Zusatzteiles ist es zweckmäßig, daß die Telefonhörmuschel und/oder das Telefonmikrofon und/oder die Schnittstelle in dem Zusatzteil angeordnet sind. Insbesondere kann das Telefonmikrofon als Richtmikrofon ausgeführt sein und in die dem Handgerät zuweisende Unterseite des Zusatzteiles eingebracht werden. In gleicher Weise kann der Steckverbinder der Schnittstelle in die dem Handgerät zuweisenden Unterseite des Zusatzteiles eingebracht sein.

Durch die Gestaltung des Telefonmikrofons als Richtmikrofon kann beim Telefonieren das Handgerät mit der Telefonhörmuschel an das Ohr genommen werden, wobei die am anderen Ende des Handgerätes ausgebrachte Sprache durch das Richtmikrofon erfaßt wird, auch wenn es nicht unmittelbar im Mundbereich angeordnet ist. Der technische Vorteil besteht darin, daß alle Telefonelemente in dem Kopfteil unterzubringen sind und somit der modulare Einsatz erleichtert wird.

Die Anordnung der Schnittstelle an der Unterseite des Zusatzteiles gewährleistet, daß der Stecker nahezu störungsfrei eingesteckt werden kann, ohne daß die Außenfläche des Handgerätes beinträchtigt wird.

In einer weiteren Ausgestaltung der Erfindung ist vorgesehen, daß an der Unterseite des Handgerätes ein Handscanner mit einem pistoleanartigen Trage- und Auslösegriff befestigbar ist, der mit dem Computer verbindbar ist. Damit wird die erfindungsgemäße Anordnung auch um die Funktion eines Handscanners erweiterbar.

Der Handscanner kann über ein Kabel zwischen einem Steckverbinder an der Unterseite des Handgerätes und einem Steckverbinder in dem Gehäuse des Handscanners oder über zwei miteinander kommunizierende Infrarotschnittstellen, von denen eine in dem Handgerät oder in dem Kopfteil und die andere in dem Handscanner angeordnet ist, verbunden werden. Letztere Variante dient dient insbesondere der Gestaltung explosionsgeschützter Geräte.

Zur mechanischen Aufnahme des Handscanners ist in einer weiteren Ausführung an der Unterseite des Handgerätes eine Platte befestigt, die eine Scharnieraufnahme aufweist, in die der Handscanner schwenkbar einklinkbar ist.

Da bei einem an dem Handgerät befestigten Handscanner der Einsatz in einen sogenannten Cradle, der dem Aufladen und dem Datenaustausch zwischen einem Rechner und dem Handgerät dient, mechanisch schlecht möglich ist, kann durch das Abschwenken des Handscanners von dem Handgerät selbiges auch bei angebauten Handscanner in ein Cradle eingesetzt werden.

In einer Ausgestaltung der Erfindung ist der Kopfteil mit einem A/D-Wandler versehen ist, der mit seinem digitalen Ausgang mit dem sekundären Bussystem verbunden ist. Damit kann einerseits eine Ein- und/oder Ausgabe von Analogwerten realisiert werden. Außerdem kann auch damit ein Power-Managment verwirklicht werden, insbesondere wenn die Betriebsspannungsversorgung über Batterien in dem Kopfteil erfolgt.

In einer weiteren Ausgestaltung der Erfindung ist vorgesehen, daß der Kopfteil mit einem Zusatz-Mikrocontroller versehen ist, der mit dem sekundären Bussystem verbunden ist. Dadurch kann beispielsweise eine Chipkartenansteurung realisiert werden.

Zur Speicherung weiterer, über die Betriebssystemfunktionen hinausgehender Funktionen und Zusatzfunktionen und/oder für die Sicherung von anwenderspezifischer Software, Anwenderdaten oder Daten des Kopfteiles ist es zweckmäßig, daß der Kopfteil mit RAM-, ROM- und/oder Flash-Speichern versehen ist, die mit dem sekundären Bussystem verbunden sind.

Die Erfindung soll nachfolgend anhand eines Ausführungsbeispieles näher erläutert werden.

In den zugehörigen Zeichnungen zeigt
- Fig. 1: eine Vorderansicht der erfindungsgemäßen Anordnung,
- Fig. 2: eine Rückansicht der erfindungsgemäßen Anordnung,
- Fig. 3: eine Draufsicht auf die erfindungsgemäße Anordnung,

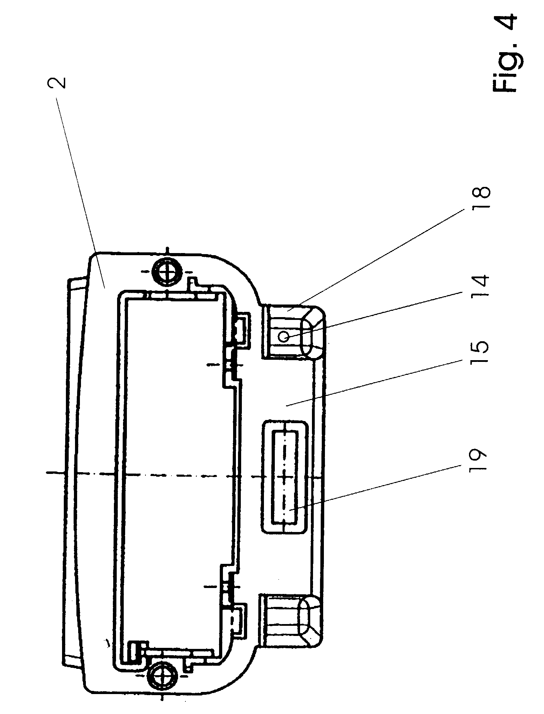

- Fig. 4: eine Unteransicht eines Kopfteiles,

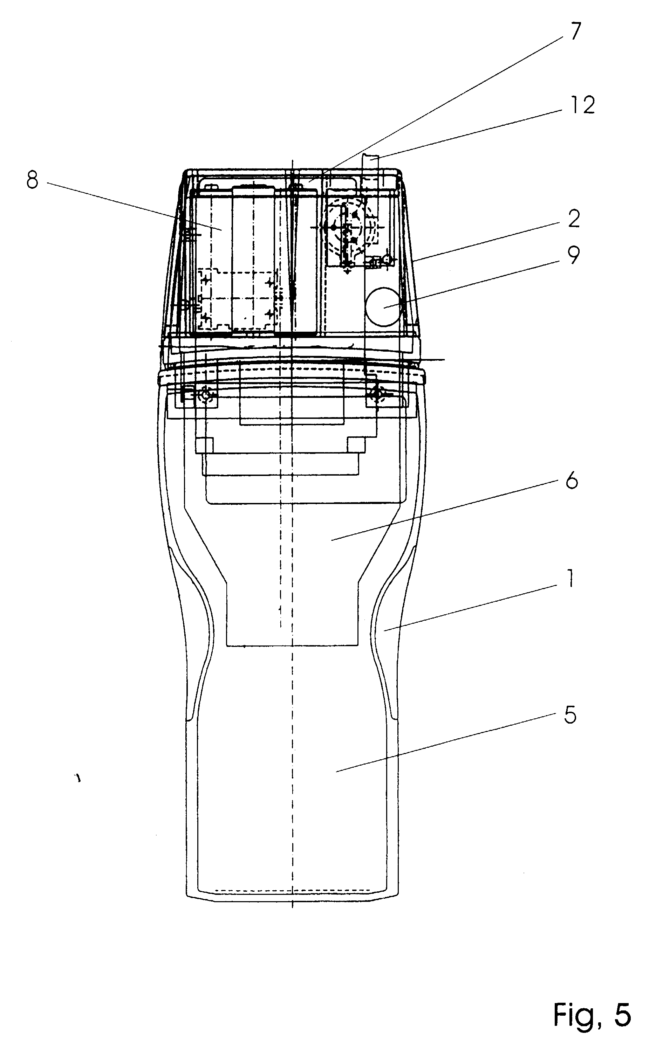

- Fig. 5: eine Vorderansicht der erfindungsgemäßen Anordnung in Schnittdarstellung (ohne Schraffuren),
- Fig. 6: eine Seitenansicht der erfindungsgemäßen Anordnung in Schnittdarstellung (ohne Schraffuren) und
- Fig. 7: eine schematische Darstellung der Wirkungsglieder der Anordnung.

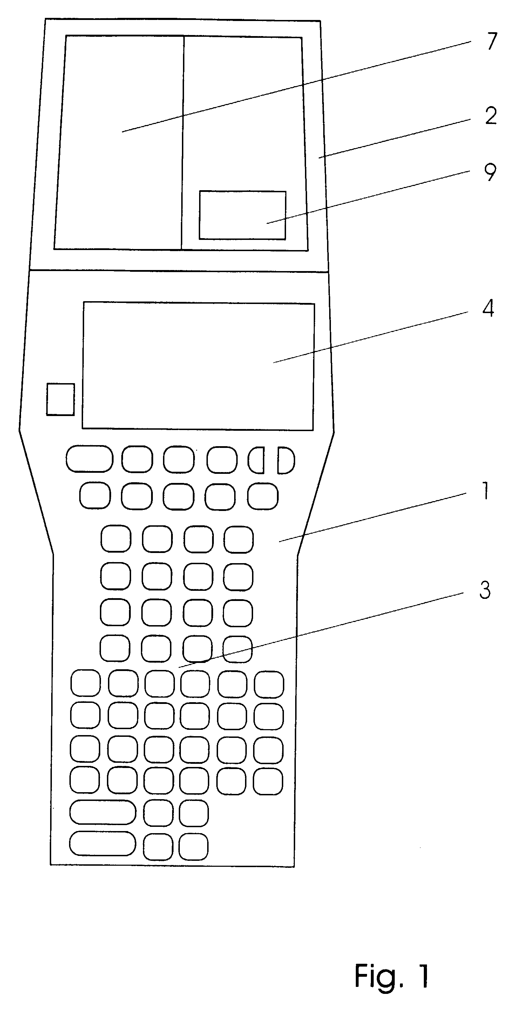

Wie in Fig. 1 dargestellt, besteht die erfindungsgemäße Anordnung aus einem Handgerät 1 und einem Kopfteil 2. An dem Handgerät 1 ist eine Tastatur 3 und ein Display 4 eingebracht.

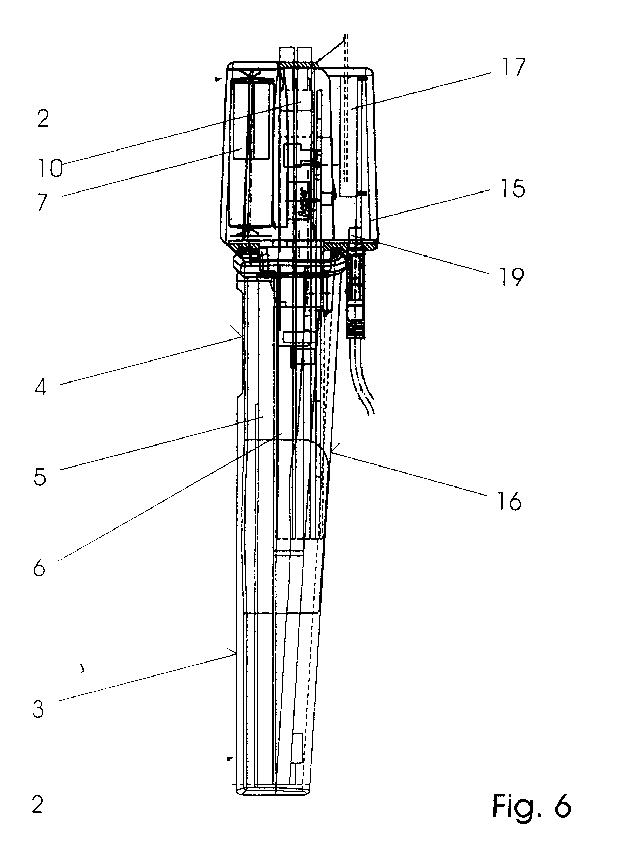

Wie in Fig. 6 gezeigt, ist hinter der Tastatur 3 und dem Display 4 eine Computerplatine 5 angeordnet. Auf Computerplatine 5 sind die nicht näher dargestellten Schaltungsanordnungen und Schaltkreise des Computers untergebracht.

Der Kopfteil 2 ist auf das Handgerät 1 aufsteckbar. Im aufgesteckten Zustand greift das Kopfteil 2 mit einem Einsatz 6 in das Handgerät 1 ein. Auf den Einsatz 6 ist in nicht näher dargestellter Art und Weise die gesamte Elektronik zur Ansteuerung der modularen Zusatzbaugruppen in dem Kopfteil 2 angeordnet. Dabei ist der Einsatz 6 mit dem Computer des Handgerätes 1 verbunden.

Im Kopfteil 2 ist ein Batteriefach 7 vorgesehen. In dieses Batteriefach 7 sind Batterien 8 einbringbar. Auf der Vorderseite des Kopfteiles 2 ist eine Infrarotschnittstelle 9 angeordnet. Mit dieser Infrarotschnittstelle ist es möglich, mit übergeordneten Rechnersystemen zu kommunizieren.

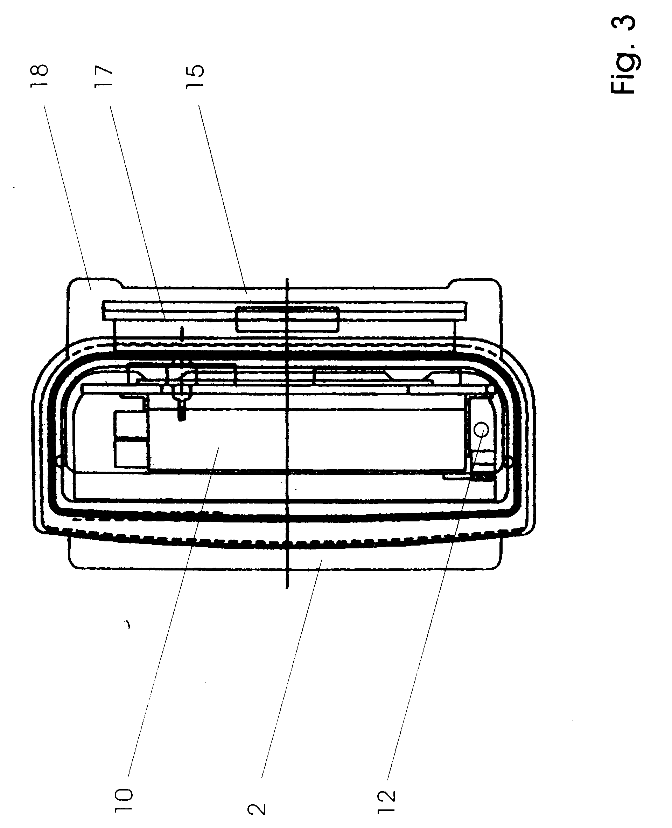

Wie aus Fig. 3 ersichtlich ist, ist von der Oberseite des Kopfteiles 1 ein Schacht 10 zugänglich, in den ein oder zwei nicht näher dargestellte PC-Cards einsteckbar sind. Mit diesen PC-Cards kann das Leistungsvermögen des Computers erhöht werden.

Ebenfalls auf der Oberseite des Kopfteiles 2 ist ein BarcodeScanner 11 angeordnet. Über diesen können beispielsweise Produktdaten in das Handgerät 1 eingegeben und dort verarbeitet werden.

Ebenfalls auf der Oberseite des Kopfteiles 2 ist eine Antenne 12 angeordnet. Über diese Antenne 12 ist es möglich, daß ein Datenaustausch zwischen dem Computer des Handgerätes 1 zu übergeordneten Rechnersystemen stattfindet. Zum Zwecke der Funkkommunikation ist die Antenne 12 mit nicht näher dargestellten Sende- und Empfangseinrichtungen im Kopfteil 2 verbunden.

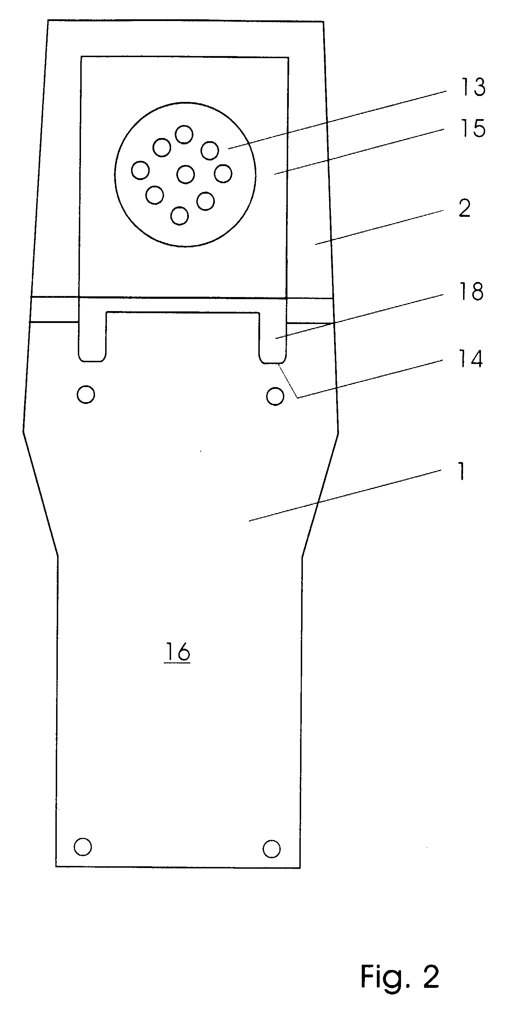

Das Vorhandensein dieser Sende- und Empfangseinrichtungen sowie der Antenne 12 wird außerdem dadurch genutzt, daß auf der Rückseite des Kopfteiles 1 eine Hörmuschel 13 und ein Telefonmikrofon 14 angeordnet ist. Hierzu wird die Tatsache genutzt, daß an dem Kopfteil 1 ein Zusatzteil 15 vorgesehen ist. Dieses Zusatzteil 15 steht über die Fläche der Rückseite 16 vor. Von der Oberseite des Kopfteiles 2 ist über einen Chip-Card in Schlitz 17 eine Chip-Karte einsteckbar. Wie in Fig. 2 dargestellt, befindet sich nunmehr die Hörmuschel 13 und das Telefonmikrofon 14 in den Zusatzteil 15. Folglich kann die gesamte Anordnung von der Rückseite 16 her benutzt werden, wobei die Hörmuschel 13 eng am Ohr des Benutzers anliegen kann.

Ein Mikrofon 14 ist in die Unterseite des Zusatzteiles 15 eingebracht. Hierbei ist es besonders zweckmäßig, dieses Mikrofon in eine Einklinknase 18, die mit dem Zusatzteil 15 verbunden ist, anzuordnen. Da sich das Telefonmikrofon 14 somit nicht in unmittelbarer Nähe des Mundes eines Benutzers befindet, ist dieses als Richtmikrofon ausgeführt, wodurch die Sprache des Benutzers aufgefangen werden kann, auch wenn sich das Mikrofon 14 nicht in unmittelbarer Nähe des Mundes des Benutzers befindet.

Schließlich ist auf der Unterseite des Zusatzteiles 15 ein Steckverbinder 19 für eine serielle und/oder parallele Schnittstelle vorgesehen, über den eine Leitungsverbindung zu anderen Rechnersystemen oder peripheren Geräten hergestellt werden kann.

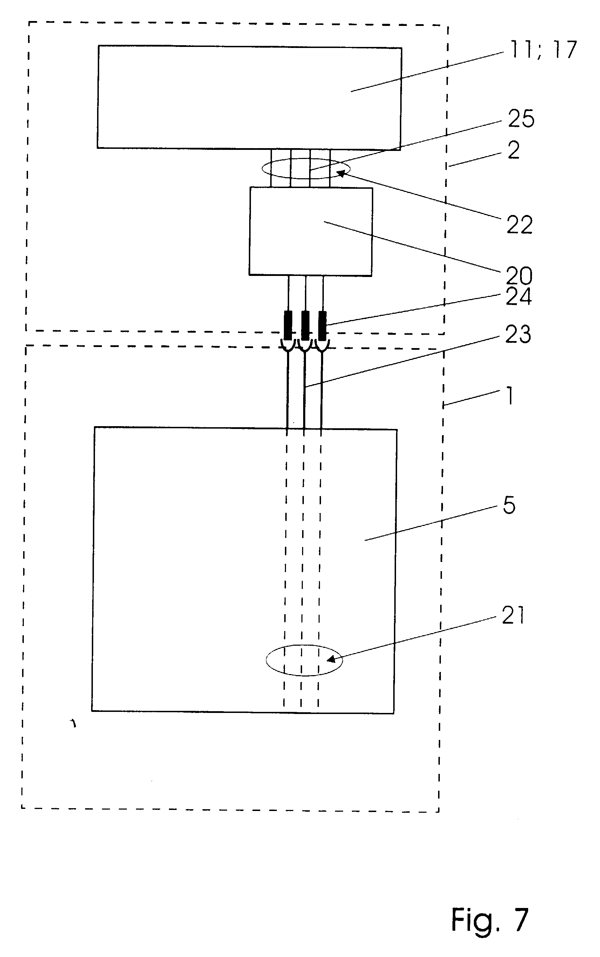

Wie in Fig. 7 dargestellt, weist der Kopfteil 1 einen Kommunikationscontroller 20 zwischen dem primären Bussystem 21 und einem sekundären Bussystem 22 auf. Der Kopfteil 1 ist mit ersten Busleitungen 23, die im Aufbau dem primären Bussystem 21 entsprechen, versehen. Diese ersten Busleitungen 23 sind einerseits mit dem Kommunikationscontroller 20 und andererseits über lösbare Verbindungen 24 mit dem primären Bussystem 21 verbunden. Weiterhin sind zweite Busleitungen 25 des sekundären Bussystems 22 einerseits mit dem Kommunikationscontroller 20 und andererseits mit den Ein-, Ausgabe- und/oder Kommunikationsmitteln, beipielsweise einem Barcodescanner 11 oder einem Chipkartenschlitz 17 verbunden.

Der Kommunikationcontroller 20 ermöglicht es, daß das Protokoll auf dem primären Bussystem 21 in ein Protokoll auf dem sekundären Bussystem 22 umgesetzt wird.

### Bezugszeichenliste

- 1: Handgerät
- 2: Kopfteil
- 3: Tastatur
- 4: Display
- 5: Computerplatine
- 6: Einsatz
- 7: Batteriefach
- 8: Batterie
- 9: Infrarotschnittstelle
- 10: Schacht
- 11: Barcodescanner
- 13: Antenne
- 13: Mörmuschel
- 14: Telefonmikrofon
- 15: Zusatzteil
- 16: Rückseite
- 17: Chipkartenschlitz
- 18: Einklinknase
- 19: Steckverbinder
- 20: Kommunikationscontroller
- 21: primäres Bussystem
- 22: sekundäres Bussystem
- 23: erste Busleitungen
- 24: lösbare Verbindung
- 25: zweite Busleitungen

## Patentansprüche

1. Anordnung zur multimedialen Datenverarbeitung mit einem Handgerät (1), in dem ein Computer mit einem primären Bussystem (21) angeordnet ist, das Handgerät (1) mit Funktionalelementen, wie einer Tastatur (3), einem Bildschirm (4) und Ein-/Ausgabeschnittstellen versehen ist, die mit dem Computer in Wirkungsverbindung stehen, und auf das ein Kopteil (2) aufgesetzt ist, in dem modular weitere Ein-, Ausgabe- und Kommunikationsmittel (11; 17) angeordnet sind, die zumindest teilweise mit dem Computer in Wirkungsverbindung stehen,
**dadurch gekennzeichnet,**
daß der Kopfteil (2) einen Kommunikationscontroller (20) zwischen dem primären Bussystem (21) und einem sekundären Bussystem (22) aufweist,
daß der Kopfteil (2) mit ersten Busleitungen (23), die im Aufbau dem primären Bussystem (21) entsprechen, versehen ist, die einerseits mit dem Kommunikationscontroller (20) und andererseits über lösbare Verbindungen (24) mit dem primären Bussystem (21) verbunden sind,
daß zweite Busleitungen (25) des sekundären Bussystems (22) einerseits mit dem Kommunikationscontroller (20) und andererseits mit den Ein-, Ausgabe- und/oder Kommunikationsmitteln (11; 17) verbunden sind.

2. Anordnung zur multimedialen Datenverarbeitung nach Anspruch 1, **dadurch gekennzeichnet,**
daß der Kopfteil (2) einen Einsatz (6) aufweist, der in das Handgerät (1) hineinragt und auf dem die ersten (23) und die zweiten Busleitungen (25) und der Kommunikationscontroller (20) angeordnet sind.

3. Anordnung zur multimedialen Datenverarbeitung nach einem der Ansprüche 1 bis 2, **dadurch gekennzeichnet,**
daß der Kopfteil (2) mit dem Handgerät (1) lösbar verbunden ist.

4. Anordnung zur multimedialen Datenverarbeitung nach einem der Ansprüche 1 bis 3, **dadurch gekennzeichnet,**
daß der Kopfteil (2) auf einer Seitenfläche des Handgerätes (1) angeordnet ist, wobei er eine Grundfläche aufweist, die der Seitenfläche des Handgerätes (1) kongruent ist.

5. Anordnung zur multimedialen Datenverarbeitung nach einem der Ansprüche 1 bis 4, **dadurch gekennzeichnet,**
daß das Handgerät (1) im wesentlichen eine Quaderform mit einer rechteckigen Vorderseite aufweist und der Kopfteil (2) eine eine Quaderform der gesamten Anordnung sichernde Form aufweist.

6. Anordnung zur multimedialen Datenverarbeitung nach einem der Ansprüche 1 bis 5, **dadurch gekennzeichnet,**
daß an der der Grundfläche des Kopfteiles (2) gegenüberliegenden Seite des Kopfteiles (2) eine oder mehrere Antennen (13) angeordnet sind und im Kopfteil (2) Sende- und Empfangseinrichtungen angeordnet sind.

7. Anordnung zur multimedialen Datenverarbeitung nach einem der Anprüche 1 bis 6, **dadurch gekennzeichnet,**
daß an der der Grundfläche des Kopfteiles (2) gegenüberliegenden Seite des Kopfteiles (2) ein Schacht (10) zur Aufnahme von Ergänzungsmodulen, wie PC-Cards, vorgesehen sind, die mit dem Computer verbindbar sind.

8. Anordnung zur multimedialen Datenverarbeitung nach einem der Anprüche 1 bis 7, **dadurch gekennzeichnet,**
daß an der der Grundfläche des Kopfteiles (2) gegenüberliegenden Seite des Kopfteiles (2) ein Barcodeleser (11), vorgesehen ist, der mit dem Computer verbunden ist.

9. Anordnung zur multimedialen Datenverarbeitung nach einem der Ansprüche 1 bis 8, **dadurch gekennzeichnet,**
daß im Kopfteil (2) die Stomversorgung für die gesamte Anordnung angeordnet ist.

10. Anordnung zur multimedialen Datenverarbeitung nach Anspruch 9, **dadurch gekennzeichnet,**
daß die Stromversorgung aus einer oder mehreren Batterien (8) besteht, die in einem verschließbaren Batteriefach (7) einbringbar sind.

11. Anordnung zur multimedialen Datenverarbeitung nach einem der Ansprüche 1 bis 10, **dadurch gekennzeichnet,**
daß in dem Kopfteil (2) eine Infrarotschnittstelle (9) angeordnet ist.

12. Anordnung zur multimedialen Datenverarbeitung nach einem der Ansprüche 1 bis 11, **dadurch gekennzeichnet,**
daß in dem Kopfteil (2) auf der Rückseite (16) eine Telefonhörmuschel (13) und ein Telefonmikrofon (14) angeordnet ist.

13. Anordnung zur multimedialen Datenverarbeitung nach Anspruch 12, **dadurch gekennzeichnet,**
daß eine als Steckverbinder (19) ausgeführte parallele und/oder serielle Schnittstelle in dem Kopfteil (2) angeordnet ist.

14. Anordnung zur multimedialen Datenverarbeitung nach einem der Ansprüche 1 bis 13, **dadurch gekennzeichnet,**
daß das Kopfteil (2) ein über die Rückseitenfläche (16) des Handgerätes (1) überstehendes Zusatzteil (15) aufweist, in dem ein Einschubschlitz (17) für Chipkarten angeordnet ist, wobei sich in dem Zusatzteil (15) ein Chipkartenleser befindet.

15. Anordnung zur multimedialen Datenverarbeitung nach Anspruch 12 oder 13 **dadurch gekennzeichnet,**
daß die Telefonhörmuschel (13) und/oder das Telefonmikrofon (14) und/oder die Schnittstelle (19) in dem Zusatzteil (15) angeordnet sind.

16. Anordnung zur multimedialen Datenverarbeitung nach Anspruch 15, **dadurch gekennzeichnet,**
daß das Telefonmikrofon (14) als Richtmikrofon ausgeführt ist und in die dem Handgerät (1) zuweisenden Unterseite des Zusatzteiles (15) eingebracht ist.

17. Anordnung zur multimedialen Datenverarbeitung nach Anspruch 15 oder 16, **dadurch gekennzeichnet,**
daß der Steckverbinder (19) der Schnittstelle in die dem Handgerät (1) zuweisenden Unterseite des Zusatzteiles (15) eingebracht ist.

18. Anordnung zur multimedialen Datenverarbeitung nach einem der Ansprüche 1 bis 18, **dadurch gekennzeichnet,**
daß an der Unterseite des Handgerätes (1) ein Handscanner mit einem pistolenartigen Trage- und Auslösegriff befestigbar ist, der mit dem Computer verbindbar ist.

19. Anordnung zur multimedialen Datenverarbeitung nach einem der Ansprüche 1 bis 19, **dadurch gekennzeichnet,**
daß der Handscanner über ein Kabel zwischen einem Steckverbinder an der Unterseite des Handgerätes (1) und einem Steckverbinder in dem Gehäuse des Handscanners oder über zwei miteinander kommunizierende Infrarotschnittstellen, von denen eine in dem Handgerät oder in dem Kopfteil und die andere in dem Handscanner angeordnet ist, verbindbar ist.

20. Anordnung zur multimedialen Datenverarbeitung nach einem der Ansprüche 1 bis 19, **dadurch gekennzeichnet,**
daß an der Unterseite des Handgerätes (1) eine Platte befestigt ist, die eine Scharnieraufnahme aufweist, in die der Handscanner schwenkbar einklinkbar ist.

21. Anordnung zur multimedialen Datenverarbeitung nach einem der Ansprüche 1 bis 20, **dadurch gekennzeichnet,** der Kopfteil (2) mit einem A/D-Wandler versehen ist, der mit seinem digitalen Ausgang mit dem sekundären Bussystem (22) verbunden ist.

22. Anordnung zur multimedialen Datenverarbeitung nach einem der Ansprüche 1 bis 21, **dadurch gekennzeichnet,** daß der Kopfteil (2) mit einem Zusatz-Mikrocontroller versehen ist, der mit dem sekundären Bussystem verbunden ist.

23. Anordnung zur multimedialen Datenverarbeitung nach einem der Ansprüche 1 bis 22, **dadurch gekennzeichnet,** daß der Kopfteil (2) mit RAM-, ROM- und/oder Flash-Speichern versehen ist, die mit dem sekundären Bussystem (22) verbunden sind.
